Europäisches Patentamt

European Patent Office

Office européen des brevets

(11) Publication number: **0 068 413**
**B1**

## EUROPEAN PATENT SPECIFICATION

(45) Date of publication of patent specification: **11.09.85**

(51) Int. Cl.⁴: **B 01 J 49/00, C 22 B 3/00**

(21) Application number: **82105467.3**

(22) Date of filing: **22.06.82**

(54) **Method of using higher concentration sulfuric acid for stripping and precipitation of adsorbed magnesium.**

(30) Priority: **22.06.81 US 275651**

(43) Date of publication of application:
**05.01.83 Bulletin 83/01**

(45) Publication of the grant of the patent:
**11.09.85 Bulletin 85/37**

(84) Designated Contracting States:
**BE DE GB IT NL SE**

(56) References cited:
**GB-A- 532 786**
**US-A-1 709 398**
**US-A-1 977 560**
**US-A-4 263 145**

(73) Proprietor: **AMERICAN PETRO MART, INC.**
**P.O. Box Drawer ARI**
**Bartow Florida 33830 (US)**

(72) Inventor: **Hedrick, Harold Nelson**
**121 Ashbrook Drive**
**Brandon Florida 33511 (US)**
Inventor: **Whitney, Solon Gene**
**760 South Oak Avenue**
**Bartow Florida 33830 (US)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Courier Press, Leamington Spa, England.

## Description

This invention relates to the regeneration of cation exchange resin containing adsorbed magnesium ions, and the recovery of the magnesium as a crystalline precipitate. The regeneration uses moderate to high concentration aqueous $H_2SO_4$, and the recovered precipitate comprises co-crystallization compounds of $MgSO_4$ and $H_2SO_4$. The resin for regeneration may contain other cations contained in wet process phosphoric acid.

As is well known in the ion exchange arts, metal ions adsorbed on cation exchange resins can be eluted with aqueous solutions of strong mineral acids, such as hydrochloric, nitric, and sulfuric acids. The adsorbed metal ions are exchanged for hydrogen ions so that the resin is returned to its hydrogen form for further use in the removal of metal ions from solutions. Commonly, such metal ion elution and cation exchange resin regeneration is carired out with relatively dilute acid solutions, and these are prepared by adding water to commercial concentrations of the regenerating acid. Since concentrated mineral acids produce heat when diluted with water, cooling of the regenerating acid solutions may be required with energy being used for the regeneration. Further, the use of dilute acid solutions results in a large volume of waste solution which presents a disposal problem.

The foregoing problems were encountered in the development of a system for removing principally magnesium and other cations from phosphoric acid, especially phosphoric acid prepared from phosphate rock having relatively high concentrations of magnesium, as is common with lower grades of phosphate rock. The system utilized moving folded beds of cation exchange resin for the adsorption and elution of the magnesium. A system of this kind is described in United States Patent 4,280,904. The resin regeneration as described in this patent, is carried out with various acids including sulfuric acid. In experiments conducted prior to the present invention, the elution and regeneration was carried out with 3N sulfuric acid (approximately 17% $H_2SO_4$ concentration). This eluting solution was prepared by adding water to commercial grade sulfuric acid (viz. 93%). The spent eluting solution which contained the removed magnesium together with eluted calcium gave processing and disposal problems. It was difficult and expensive to recover the magnesium as a precipitated solid, and yet it was undesirable to dispose of the large volume of spent eluting solution without further processing. These problems are overcome by the present invention.

Wet process phosphoric acid prepared from phosphate rock will contain organic matter which may adhere to the resin beads as transferred for regeneration. It is therefore another important advantage of the method of this invention that such organic matter does not cause any operational problems even though the resin beads are repeatedly regenerated and recycled to the phosphoric acid treating column. The high concentration of $H_2SO_4$ in the regenerating column chars the organic matter and facilitates its removal from the resin beads by the regenerating solution.

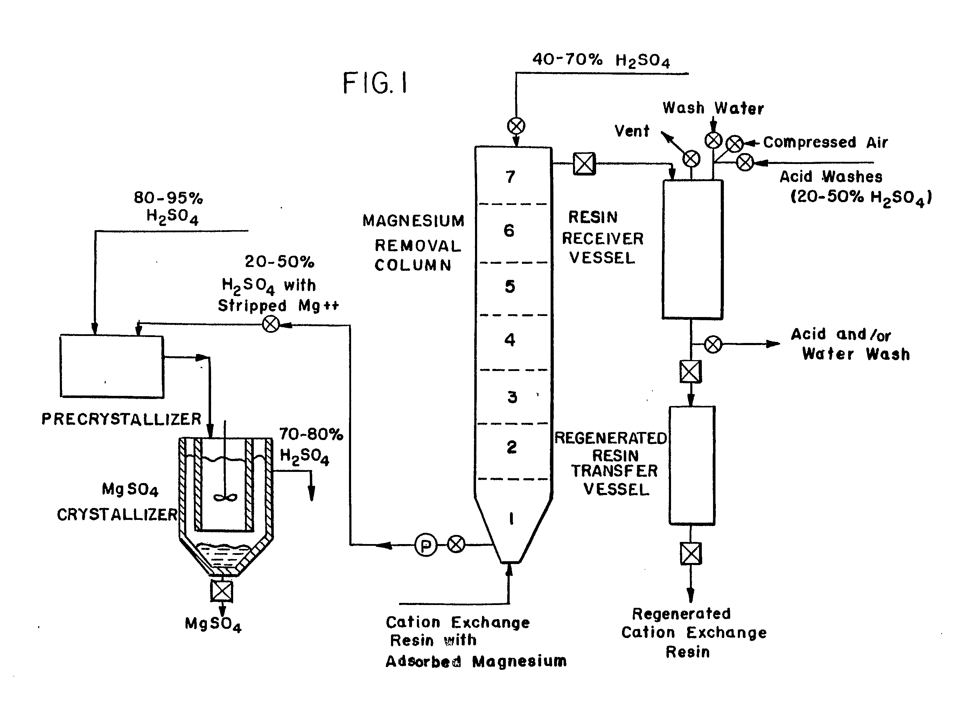

In the accompanying drawing, Fig. 1 is a diagrammatic flow sheet illustrating a preferred embodiment of the method of the present invention for regenerating a cation exchange resin loaded with adsorbed magnesium.

In accordance with the present invention, adsorbed magnesium is removed from the cation exchange resin, such as that resulting from the cation exchange resin treatment of phosphoric acid, using a sulfuric acid eluting solution of relatively high concentration (viz. 40—70%). The high acid concentration regenerating solution is introduced into the top of a regeneration column containing a series of increments of the resin for regeneration. In the operation of the column, increments of the magnesium loaded resin are sequentially introduced into the bottom of the column while regenerated resin increments are removed from the top of the column. A magnesium ion-containing sulfuric acid solution is removed from the lower portion of the column at a still relatively high concentration (20 to 50%). The use of these high concentrations reduces the liquid volume required for regeneration, and facilitates the $MgSO_4$ precipitation, and the waste disposal of spent acid.

Magnesium is precipitated from the acid solution removed from the regeneration column by adding more highly concentrated sulfuric acid thereto, the $H_2SO_4$ concentration being increased to a level at which magnesium sulfate crystallizes and precipitates. This precipitate comprises co-crystallization compounds of $MgSO_4$ and $H_2SO_4$ having the formula $MgSO_4 \cdot xH_2SO_4$ (sometimes referred to herein as the magnesium sulfate precipitate.). The precipitate may contain from 1 to 3 moles of $H_2SO_4$ per mole of $MgSO_4$. The supernatant from which the precipitate is separated has a sufficiently high concentration of sulfuric acid to permit it to be reused as part of the regenerating solution, or for other purposes, such as in the treatment of phosphate rock in the manufacture of phosphoric acid therefrom.

The regenerated resin increments removed from the top of the column contain sulfuric acid at the concentration of the incoming regenerating solution (viz. 40 to 70%). It was found that initial water washing of the removed resin could cause serious degradation of the resin, at least with some resins, the resin beads tending to expand as the sulfuric acid is removed. In a preferred embodiment of the present invention, therefore, the removed resin is first washed with aqueous sulfuric acid of intermediate concentration and thereafter washed with water. This staged and more gradual reduction of the acid concentration minimizes fracturing or spalling of the resin beads. Further, all or part of the acid wash and the water wash can be combined to provide additional acid wash solution at the desired intermediate concentration. The excess of the acid wash can be used for dilution of the commercial concentration acid in preparing the stripping column regenerating solution.

The method of the present invention can be applied to any cation exchange resin where the predominant metal ions adsorbed thereon are magnesium ions to be removed in the regeneration column. Further, the method is applicable to the elution of magnesium adsorbed on a wide variety of cationic exchange resins. For example, a crosslinked polystyrene aryl sulfonate resin can be used. Resins are preferred which can be used with high concentrations of $H_2SO_4$. Where the loaded resin contains more than one mole of calcium per 10 moles of magnesium, it is desirable to first remove part of the calcium from the resin while leaving the magnesium adsorbed thereon. The calcium to magnesium ion ratio is preferably reduced to at least 1:9 and optionally below 1:20. Calcium precipitation as calcium sulfate or a hydrate or complex thereof can occur within the magnesium removal column. It is desired to minimize such precipitation, and to recover the Mg as $MgSO_4$ separately from the $CaSO_4$.

The method of this invention is preferably employed in conjunction with a moving folded bed apparatus but can be utilized in fixed bed systems as well as other resin handling systems. Such a system is described in United States Patent No. 4,228,001, and also in United States Patent 4,280,904 with specific reference to treatment of wet process phosphoric acid prepared from phosphate rock. For the purpose of the present invention, the important feature of such folded moving bed systems is that the loaded resin is removed in increments from the top of the loading column, and either with or without further processing to remove the calcium, is introduced into the bottom of the magnesium removal column, the removal column introduction also being incremental. The resin increments may be transferred as a slurry using pump pressure and a liquid transport medium, as described in United States Patent Nos. 4,228,001 and 4,280,904. Alternatively, an air-pulse transfer mechanism can be used, the resin being transferred in compacted increments by the generation of air pressure in a pulse-transfer vessel.

In the magnesium removal column, increments of the magnesium containing cation exchange resin are sequentially introduced into the bottom of the column for regeneration of the resin. Regenerated increments of the resin are sequentially removed from the top of the column. Preferably, with each incremental introduction into the bottom of the column a resin increment of corresponding volume is removed from the top of the column. When the column is fully packed with resin, as preferred, this will automatically be accomplished, the pulsed increment of resin introduced into the bottom of the column automatically causing the ejection of a corresponding resin increment from the top of the column. The magnesium removal column will contain a plurality of increments in the form of resin bands or layers moving from the bottom to the top of the column, and being progressively regenerated by the magnesium removal as they ascend in the column. For example, the column may contain from 5 to 10 of such increments.

In accordance with the present invention, there is introduced into the top of the regeneration column an aqueous sulfuric acid regenerating solution of relatively high concentration. The regenerating solution preferably has a concentration within the range from 40 to 70%, such as 50 to 60%. Higher concentrations within the range of 70 to 95% can be used, if spalling of the resin beads can be avoided. Advantageously, a concentration of at least 40% is used and even better results are obtained with concentrations of at least 50%. (Concentrations of $H_2SO_4$ are weight percents). At the point of its introduction, the regenerating solution is passed downwardly through an upper increment of the resin, thereby assuring completion of the regeneration of the resin increment before it is removed from the column. Usually, although not necessarily, the first resin increment contacted will be the uppermost increment immediately prior to its removal, the regenerating solution being introduced into the top of the column.

The regenerating solution may percolate through the regenerating column under gravitational action, or its flow may be assisted by pump pressure. The flow may be continuous, but is preferably interrupted during the introduction and removal of the resin increments. Concurrently with the introduction of the regenerating solution into the upper portion of the column, a magnesium ion-containing aqueous sulfuric acid solution is removed from the lower portion of the column. The acid concentration of the regenerating solution decreases as the hydrogen ions of the acid are exchanged for the magnesium so that the removed solution will have a substantially lower acid concentration, such as a concentration of from 20 to 50% $H_2SO_4$ by weight. The $H_2SO_4$ concentration will be reduced as it moves down the column. A differential concentration of at least 10—20% or more is desirable, such as from 50% on introduction to 30 to 40% on removal. The concentration of the $H_2SO_4$ solution containing the eluted magnesium as removed from the bottom of the column can range from 20 to 70%, depending on the concentration of the regenerating solution at the top of the column.

The removed solution containing the eluted magnesium is at a concentration where the magnesium sulfate is highly soluble. However, the $MgSO_4$ can be readily precipitated therefrom by increasing the sulfuric acid concentration. For example, this can be accomplished by adding concentrated aqueous sulfuric acid thereto, such as sulfuric acid having a concentration of at least 80%, the amount of concentrated $H_2SO_4$ required being determined by the amount and acid concentration of the magnesium containing solution. For this reason, and because more magnesium sulfate may be precipitated from a solution containing a high concentration of magnesium, the volume of regenerant is kept low, while the acid concentration and magnesium content are correspondingly high. For example, in one embodiment, after preparation and seeding of the solution, the magnesium sulfate is precipitated in an $H_2SO_4$ concentration of from 70 to 80%. The supernatant solution, at a corresponding $H_2SO_4$ concentration, can be separated from the magnesium sulfate precipitate, or separately removed, and used for other purposes. For example, the $H_2SO_4$ solution at a concentration of from 70 to 80% is suitable for use in fertilizer plant phosphate rock digestion, or can be reused as the column regenerating solution. In an advantageous embodiment, 80 to 95% $H_2SO_4$ is added to the solution removed from the column, which increases the $H_2SO_4$ concentration of the solution and also raises its temperature in preparation for the precipitation step.

These conditions tend to reduce the amount of $H_2SO_4$ in the co-crystallization precipitate $(MgSO_4 \cdot xH_2SO_4)$ so that the loss of $H_2SO_4$ is closer to the theoretical minimum of equal moles of $H_2SO_4$ and $MgSO_4$ $(MgSO_4 \cdot H_2SO_4)$, and much less than three moles of $H_2SO_4$ per mole of $MgSO_4$ $(MgSO_4 \cdot 3H_2SO_4)$.

The present invention also preferably involves a precedure for washing the regenerated resin increments after their removal from the top of the regeneration column. As removed, the resin increments will contain sulfuric acid at the concentration of the regenerating solution in the upper portion of the column, such as 40 to 70% $H_2SO_4$. In removing the sulfuric acid solution from the regenerated resin preparatory to the reuse of the resin for further processing of phosphoric acid it is preferred to first wash the removed resin with aqueous sulfuric acid at a concentration of from 20 to 50% $H_2SO_4$ by weight. Optionally, a second acid wash, at a lower concentration than the first wash is used before the resin is washed with water. Preferably, at least part of the acid and water washes after removal from the resin are combined for reuse as the acid wash for further increments of regenerated resin. This procedure will be described more specifically in connection with Fig. 1 of the accompanying flow sheet.

The effluent from the first wash, being of highest acid concentration can be reused. Further, at least part of the combined wash solutions can be used for dilution of a 95% sulfuric acid starting material. For example, the combined washes at concentrations of from 20 to 70% $H_2SO_4$ by volume may be mixed with portions of the removed supernatant from the magnesium sulfate precipitation.

With the resin wash procedure described, rapid changes in the concentration of $H_2SO_4$ in contact with the resin beads are avoided. For example, as removed, the sulfuric acid in contact with the resin may have a concentration of 50%. The first acid wash may comprise sulfuric acid of a concentration of 30%, and that wash solution will be removed by the final water wash. Such staged reduction of sulfuric acid concentration tends to avoid degradation of the resin beads, such as by fracturing or spalling of the beads.

A typical operating sequence will be described with reference to the flow sheet of Fig. 1. As shown, the cation exchange resin with the adsorbed magnesium is introduced into the bottom of the magnesium removal column. In the illustration given, the column is shown as containing resin increments 1 to 7, the resin beads being packed and filling the column from top to bottom. The uppermost increment (7) is contacted with the incoming regenerating solution (viz. 40—70% $H_2SO_4$). The newly introduced increment (1) at the bottom of the column is contacted with the $H_2SO_4$ solution of reduced concentration (viz. 20—50% $H_2SO_4$), which is being removed from the column bottom through a valve-controlled line. This solution contains the magnesium ions, and is transferred to $MgSO_4$ precipitation.

As each new increment of resin is introduced into the column an increment of corresponding volume is ejected from the upper portion of the column through a line provided with an appropriate resin valve, being transferred to the resin receiver vessel for further processing.

In the receiver vessel the regenerated increment of resin beads is treated to remove the residual concentrated sulfuric acid (40—70% $H_2SO_4$). In a preferred sequence, the free sulfuric acid liquid is first expelled from the resin by the introduction of compressed air, the expelled liquid being discharged through a valve-controlled outlet line. The resin is then washed with aqueous $H_2SO_4$ of intermediate concentration (viz. 30—40% $H_2SO_4$). If needed to avoid damage to the resin beads, a further lower concentration acid wash can then be used (viz. 5—20% $H_2SO_4$). Water is used as the final wash, and the resin beads are dried in the receiver by a compressed air expulsion of the liquid. The dried resin may be rewet with product $H_3PO_4$ and passed to the regenerated resin transfer vessel.

In transferring the resin increment from the resin receiver vessel, the resin valve on the line to the regenerated resin transfer vessel is opened, and the resin increment falls into the lower vessel, which may contain a pool of product $H_3PO_4$. The transfer can be accomplished by air pressure generated in the resin receiver vessel, and/or by introducing liquid into the resin receiver vessel, such as the product phosphoric acid (after removal of the magnesium and calcium).

In one mode of operation, the Mg ion solution of 20 to 50% $H_2SO_4$ is removed from the bottom of the column and passed to a crystallization operation. As shown in Fig. 1, the solution can be introduced into a precrystallizer to which is added concentrated $H_2SO_4$ (80—95%), which heats the solution. In practice, the added $H_2SO_4$ may be commercial grade $H_2SO_4$ of 93% concentration. The heated mixed solution is passed to a crystallizer. Crystallizer concentrations of 70—80% $H_2SO_4$ are desirable.

Seeding with preformed crystals promotes the crystallization. The crystalline precipitate comprises co-crystallization compounds of $MgSO_4$ and $H_2SO_4$, as explained above. With the preferred conditions ratios of as low as 1.4 moles of $H_2SO_4$ per mole of $MgSO_4$ can be obtained. This precipitate collects in the conical bottom portion of the crystallizer for periodic removal through a solids-transfer valve, as indicated. The removed precipitate can be centrifuged to separate residual liquid. The supernatant from the outer portion of the crystallizer is removed, and, if required, further separated from any precipitate therein.

### Claims

1. The method of regenerating a cation exchange resin loaded with adsorbed magnesium ions and precipitating the stripped magnesium ions under elution of the adsorbed magnesium ions by an aqueous sulfuric acid regeneration solution in the counter current, characterised by the steps of

a) sequentially introducing increments of said loaded resin into the bottom of a regeneration column while sequentially removing regenerated increments of said resin from the top of said column;

b) introducing an aqueous sulfuric acid ($H_2SO_4$) regenerating said solution into the upper portion of said column at a concentration of 40% or higher $H_2SO_4$ by weight and passing said regenerating solution downwardly through an upper increment of said resin before removal of said increment from said column;

c) removing a magnesium ion-containing sulfuric acid solution from the lower portion of said column at a concentration of 20% or higher $H_2SO_4$ by weight, said concentration being reduced from the introduction to the removal of said acid; and

d) precipitating magnesium sulfate from said removed solution by adding concentrated sulfuric acid thereto having a sufficiently higher $H_2SO_4$ concentration to cause the magnesium sulfate to crystallize as co-crystallization compounds of $MgSO_4$ and $H_2SO_4$.

2. The method of claim 1 in which said $H_2SO_4$ as introduced in step (b) has a concentration of at least 50%, and said added $H_2SO_4$ in step (d) has a concentration of at least 80%.

3. The method of claims 1 or 2 further characterised in that the regenerating solution introduced into said column has a concentration of 40 to 70% $H_2SO_4$ by weight.

4. The method of claims 1 or 2 further characterised in that said magnesium sulfate is precipitated at a concentration of at least 70% $H_2SO_4$ by weight, and a supernatant solution of at least 70% $H_2SO_4$ by weight is separated from the said precipitate.

5. The method of any of the foregoing claims further characterised in that said resin for regeneration contains adsorbed calcium ions together with the magnesium ions but not over one mole of calcium being present per 9 moles of magnesium.

6. The method of any of the foregoing claims further characterised in that said resin for regeneration contains organic matter from wet process phosphoric acid.

7. The method of claims 1 to 4 further characterised in that said resin for regeneration contains adsorbed calcium ions together with the adsorbed magnesium ions but not over one mole of calcium being present per 20 moles of magnesium, and in that said resin contains organic matter from wet process phosphoric acid.

8. The method of any of the foregoing claims further characterised in that the resin increments removed from the top of said column contain sulfuric acid at the high concentration of the regenerating solution as introduced, and in which the removed increments are first washed with aqueous sulfuric acid of an intermediate concentration with respect to the regenerating solution and water, and thereafter the increments are washed with water.

### Revendications

1. Procédé de régénération d'une résine échangeuse de cations chargée d'ions magnésium adsorbés et de précipitation des ions magnésium dépouillés sous élution des ions magnésium adsorbés par une solution de régénération aqueuse d'acide sulfurique à contre-courant, caractérisé par les opérations consistant à:

a) introduire séquentiellement des incréments de ladite résine chargée à la base d'une colonne de régénération tout en éliminant séquentiellement des incréments régénérés de ladite résine par le haut de ladite colonne;

b) introduire une solution de régénération aqueuse d'acide sulfurique ($H_2SO_4$) dans la partie supérieure de ladite colonne à une concentration de 40% en poids de $H_2SO_4$ ou davantage et à faire passer cette solution de régénération vers le bas par addition au sommet de la colonne de ladite résine avant élimination dudit incrément de ladite colonne;

c) éliminer une solution d'acide sulfurique contenant des ions magnésium de la partie intérieure de ladite colonne à une concentration de 20% en poids de $H_2SO_4$ ou davantage, cette concentration diminuant entre l'introduction et l'élimination dudit acide; et

d) faire précipiter du sulfate de magnésium dans cette solution éliminée par addition à celle-ci d'acide sulfurique concentré ayant une concentration en $H_2SO_4$ suffisamment élevée pour provoquer la cristallisation du sulfate de magnésium sous forme de composés de co-cristallisation de $MgSO_4$ et $H_2SO_4$.

2. Procédé selon la revendication 1, dans lequel ce $H_2SO_4$ introduit à l'étape (b) a une concentration d'au moins 50%, et en ce que cet $H_2SO_4$ ajouté à l'étape (d) a une concentration d'au moins 80%.

3. Procédé selon les revendications 1 ou 2, caractérisé en outre en ce que la solution de régénération introduite dans cette colonne a une concentration de 40 à 70% en poids de $H_2SO_4$.

4. Procédé selon les revendications 1 ou 1, caractérisé en outre en ce que ledit sulfate de magnésium est précipité à une concentration d'au moins 70% en poids de $H_2SO_4$, et en ce qu'une solution surnageante d'au moins 70% en poids de $H_2SO_4$ est séparée de ce précipité.

5. Procédé selon l'une quelconque des revendications précédentes, caractérisé en ce que cette résine pour régénération contient des ions calcium adsorbés en même temps que les ions magnésium mais leur proportion ne dépassant pas une mole de calcium pour 9 moles de magnésium.

6. Procédé selon l'une quelconque des revendications précédentes, caractérisé en ce que cette résine pour régénération contient une matière organique provenant de l'acide phosphorique du traitement au mouillé.

7. Procédé selon les revendications 1 à 4, caractérisé en outre en ce que cette résine pour régénération contient des ions calcium adsorbés en même temps que les ions magnésium, leur proportion ne dépassant cependant pas une mole de calcium pour 20 moles de magnésium, et en ce que cette résine contient une matière organique provenant de l'acide phosphorique du traitement au mouillé.

8. Procédé selon l'une quelconque des revendications précédentes, caractérisé en outre en ce que les incréments de résine retirés du sommet de ladite colonne contiennent de l'acide sulfurique à la concentration élevée de la solution de régénération introduite, et dans lequel les incréments éliminés sont d'abord lavés avec de l'acide sulfurique aqueux ayant une concentration intermédiaire entre la solution de régénération et l'eau, puis en ce que les incréments sont lavés à l'eau.

**Patentansprüche**

1. Verfahren zum Regenerieren eines Kationenaustauscherharzes, beladen mit adsorbierten Magnesiumionen, und zum Ausfällen der gestrippten bzw. abgestreiften Magnesiumionen unter Elution der adsorbierten Magnesiumionen mit einer wäßrigen Schwefelsäureregenerierungslösung im Gegenstrom, gekennzeichnet durch die Stufen:

a) aufeinanderfolgendes Einführen von Inkrementen bzw. Anteilen des beladenen Harzes in den Boden einer Regenerierungssäule, während aufeinanderfolgend regenerierte Inkremente bzw. Anteile des Harzes aus dem oberen Ende der Säule entfernt werden;

b) Einführen einer wäßrigen Schwefelsäureregenerierungslösung ($H_2SO_4$ in den oberen Teil der Säule bei einer Konzentration von 40 Gew.-%

oder mehr $H_2SO_4$ und Leiten der Regenerierungslösung abwärts durch ein oberes Inkrement des Harzes, bevor das Inkrement aus der Säule entfernt wird;

c) Entfernen einer Magnesiumionen enthaltenden Schwefelsäurelösung aus dem unteren Teil der Säule bei einer Konzentration von 20 Gew.-% oder mehr $H_2SO_4$, wobei die Konzentration von der Einführung bis zur Entfernung der Säure verringert ist; und

d) Ausfällen von Magnesiumsulfat aus der entfernten Lösung durch Zugabe von konzentrierter Schwefelsäure mit einer ausreichend hohen $H_2SO_4$-Konzentration, um das Auskristallisieren des Magnesiumsulfats als Co-Kristallisationsverbindungen von $MgSO_4$ und $H_2SO_4$ zu verursachen.

2. Verfahren nach Anspruch 1, worin die in Stufe (b) eingeführte $H_2SO_4$ eine Konzentration von wenigstens 50% und die in Stufe (d) zugegebene $H_2SO_4$ eine Konzentration von wenigstens 80% besitzt.

3. Verfahren nach Anspruch 1 oder 2, dadurch gekennzeichnet, daß die in die Säule eingeführte Regenerierungslösung eine Konzentration von 40 bis 70 Gew.-% $H_2SO_4$ besitzt.

4. Verfahren nach Anspruch 1 oder 2, dadurch gekennzeichnet, daß das Magnesiumsulfat bei einer $H_2SO_4$-Konzentration von wenigstens 70 Gew.-% ausgefällt wird und eine überschüssige Lösung von wenigstens 70 Gew.-% $H_2SO_4$ von dem Precipitat getrennt wird.

5. Verfahren nach einem der vorstehenden Ansprüche, dadurch gekennzeichnet, daß das Harz zur Regenerierung adsorbierte Calciumionen zusammen mit den Magnesiumionen enthält, jedoch nicht mehr als 1 Mol Calcium pro 9 Mol Magnesium.

6. Verfahren nach einem der vorstehenden Ansprüche, dadurch gekennzeichnet, daß das Harz zur Regenerierung organisches Material aus Phosphorsäure aus Naßverfahren enthält.

7. Verfahren nach einem der Ansprüche 1 bis 4, dadurch gekennzeichnet, daß das Harz zur Regenierung adsorbierte Calciumionen zusammen mit den adsorbierten Magnesiumionen, jedoch nicht mehr als 1 Mol Calcium pro 20 Mol Magnesium, enthält und daß das Harz organisches Material aus Phosphorsäure aus Naßverfahren enthält.

8. Verfahren nach einem der vorstehenden Ansprüche, dadurch gekennzeichnet, daß die aus dem oberen Ende der Säule entfernten Harzinkremente Schwefelsäure mit der hohen Konzentration der eingeführten Regenerierungslösung enthalten, und worin die entfernten Inkremente zunächst mit wäßriger Schwefelsäure einer mittleren Konzentration bezüglich der Regenerierungslösung und des Wassers gewaschen werden und danach die Inkremente mit Wasser gewaschen werden.

FIG. I